# EUROPEAN PATENT APPLICATION

(11) **EP 3 764 048 A1**
(43) Date of publication of application: **13.01.2021**
(21) Application number: 19185124.5
(22) Date of filing: 09.07.2019
(51) Int. Cl.: F28D 20/00

(54) **THERMAL ENERGY STORAGE**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Pagelsen, Niels, 22303 Hamburg (DE); Wagner, Jennifer Verena, 20257 Hamburg (DE); Zaczek, Alexander, 22765 Hamburg (DE)
(74) Representative: Aspacher, Karl-Georg

(57) **Abstract**

There is described a thermal energy storage comprising a housing (10) having a fluid inlet (12) and a fluid outlet (18), and a thermal energy storage structure (20) arranged within the housing (10) between the fluid inlet (12) and the fluid outlet (18), the thermal energy storage structure (20) comprising thermal energy storage elements and flexible separator elements (22), the flexible separator elements (22) being arranged such that the thermal energy storage elements are separated into layers (24), each layer (24) forming a channel between the fluid inlet (12) and the fluid outlet (18). Furthermore, a method of manufacturing a thermal energy storage and a power plant for producing electrical energy are described.

## Description

### Field of Invention

The present invention relates to the field of thermal energy storages, in particular to thermal energy storages with reduced internal natural convection and a flexible channel structure. Furthermore, the present invention relates to a method of manufacturing such a thermal storage and to a power plant for producing electrical energy.

### Art Background

Thermal energy storages play an important role in the improvement of the stability of power supply networks and for increasing the energy efficiency. There are different types of thermal energy storages depending on how the energy is stored (using heat capacity of a material or using phase change enthalpy or even using chemical reaction enthalpy). Generally, these thermal storages are facilities that are filled with thermal storage elements which have the ability to be heated up and keep a certain temperature. The thermal storage elements are heated (charged) through a flow of working fluid (gas, liquid or a mixture thereof), which has a higher temperature than the thermal storage elements. The stored energy can be recovered through a flow of fluid (with the same or a different composition), which has a lower temperature than the thermal storage elements.

When the charged thermal energy storage is at a standstill period, i.e. a period where no charging or discharging flow of working fluid is fed to the storage, a flow of fluid may still be created within the storage because of natural convection phenomena (temperature gradients). These streams can both stress the materials (mechanical stress) and create a non-uniform temperature profile in the storage. For these reasons, the creation of such internal streams caused by natural convection should be avoided.

Known attempts at solving this problem involve the use of horizontal or vertical plates within the thermal energy storage to limit convection within the structure of thermal storage elements during standstill.

In the case of vertical plates, i.e. plates that are perpendicular to the flow direction, the plates may be placed alternately in the upper and lower part of the storage. Such a pattern reduces the convection in the storage but at the same increases the pressure losses during charging and discharging of the storage. Moreover, this pattern cannot provide a uniform temperature distribution in the thermal energy storage during the standstill period. After some time, the hot fluid will be collected in the upper part of the structure, while colder fluid will be present in the lower part of the structure. Such temperature gradients may cause stress and potentially damage to the thermal storage elements.

In the case of horizontal plates, i.e. plates that are parallel to the flow direction, a number of plates are installed in the main storage between layers of thermal storage elements in order to limit the free volume within which the fluid can move. Thereby, natural convection is limited within the structure of thermal storage elements, as a vertical flow of fluid is generally prevented by the plates. However, since the thermal storage elements may change shape and size over time, the layer of thermal storage elements resting on each plate may compact such that a corresponding empty space or headroom is formed above the thermal storage elements and directly under the next horizontal plate. In this situation, heat may be exchanged between the layers through the dividing plates. The result is that, also in this case, after some time of standstill, the hot fluid will be collected in the upper layers of thermal storage elements, while colder fluid will be collected in the lower layers of thermal storage elements.

Accordingly, there may be a need for an improved thermal energy storage which does not suffer from the above-mentioned drawbacks of the known storages.

### Summary of the Invention

This need may be met by the subject matter according to the independent claims. Advantageous embodiments of the present invention are described by the dependent claims.

According to a first aspect of the invention there is provided a thermal energy storage. The described thermal energy storage comprises (a) a housing having a fluid inlet and a fluid outlet, and (b) a thermal energy storage structure arranged within the housing between the fluid inlet and the fluid outlet, the thermal energy storage structure comprising thermal energy storage elements and flexible separator elements, the flexible separator elements being arranged such that the thermal energy storage elements are separated into layers, each layer forming a channel between the fluid inlet and the fluid outlet.

This aspect of the invention is based on the idea that the thermal energy storage elements are separated into layers by flexible separator elements, i.e. separator elements that are capable of changing their form to such an extent that no headroom is formed within a layer due to compacting of the thermal storage elements. In other words, the flexible separator elements allow the thickness or height of each layer to dynamically change in such a way that the entire structure is kept close together. Thus, when one or more parts of a layer of thermal storage elements within the thermal energy storage structure compact(s), corresponding parts of the above layer will move downwards and close the gap such that no (or very little) headroom is formed within the layer. Similar changes will occur in the other layers further above.

The housing may be made of a heat-resistant material, such as steel or ceramics, and may have a cylindrical shape with a rectangular, quadratic, circular, elliptic or polygonal shape. Depending on the application, the housing may have a cross-sectional area of 25 m² or more.

The thermal energy storage elements preferably have a large heat storage capacity and are arranged in layers divided by flexible separator elements to form the thermal energy storage structure. The thermal storage elements are dimensioned and spaced apart from each other such that each layer allows a flow of working fluid, in particular in a direction parallel to the layer. The separator elements substantially prevent a flow of working fluid from one layer to another, thereby preventing heat convection between the layers, in particular during standstill where no flow of working fluid is supplied to the thermal energy storage.

The fluid inlet and the fluid outlet may be made of the same material as the housing and may have a similar or different cross-sectional size and shape as the housing. The fluid inlet may be connected to an external source of working fluid, such as a vaporizer of a steam power plant. In use, the fluid inlet is adapted to direct a flow of received working fluid towards the housing such that the working fluid flows through the thermal energy storage structure and stores thermal energy therein (charging) or receives thermal energy therefrom (discharging).

For charging the thermal energy storage, the working fluid may e.g. comprise water (in particular hot steam), air, nitrogen or argon. For discharging the thermal energy storage, the working fluid may e.g. comprise water, steam, air, nitrogen or argon.

In the present context, the phrase "channel between the fluid inlet and the fluid outlet" indicates that one end of the channel is closer to the fluid inlet while the other end of the channel is closer to the fluid outlet. In other words, the channel may extend all the way from the fluid inlet to the fluid outlet, it may have one end in direct contact with either the fluid inlet or the fluid outlet, or it may only occupy a part of the space between the fluid inlet and the fluid outlet (without being in direct contact with the fluid inlet and the fluid outlet).

According to an embodiment of the invention, each channel has a predetermined shape.

In other words, the flexibility of the flexible separator elements may be used to create channels with individual shape. For example some channels may be formed to change main direction along the way from the fluid inlet towards the fluid outlet or they may have sloped and/or tapered sections.

According to a further embodiment of the invention, the fluid inlet comprises an inlet fluid distribution structure adapted to selectively guide a working fluid towards one or more of the channels.

In other words, the inlet fluid distribution structure is capable of supplying the working fluid to selected channels within the thermal storage structure. Thereby, thermal energy can e.g. be selectively supplied to channels having a lower temperature than other channels in order to reduce temperature differences within the structure.

According to a further embodiment of the invention, the inlet fluid distribution structure comprises a plurality of fluid inlet conduits.

Each conduit is preferably directed towards a single channel or a group of channels.

According to a further embodiment of the invention, at least one fluid inlet conduit (of the plurality of fluid inlet conduits) comprises a valve.

By operating the valves, selected fluid inlet conduits may be completely and/or partially opened while the remaining fluid inlet conduits are closed.

According to a further embodiment of the invention, the fluid outlet comprises an outlet fluid distribution structure adapted to selectively receive a working fluid from one or more of the channels.

Accordingly, the outlet fluid distribution structure is capable of receiving the working fluid from selected channels within the thermal storage structure. Thereby, thermal energy can e.g. be selectively withdrawn from channels having a higher temperature than other channels in order to reduce temperature differences within the structure.

According to a further embodiment of the invention, the outlet fluid distribution structure comprises a plurality of fluid outlet conduits.

Each conduit is preferably directed towards a single channel or a group of channels.

According to a further embodiment of the invention, at least one fluid outlet conduit (of the plurality of fluid outlet conduits) comprises a valve.

By operating the valves, selected fluid outlet conduits may be completely and/or partially opened while the remaining fluid inlet conduits are closed.

According to a further embodiment of the invention, the flexible separator elements comprise sheets or foils of material through which the working fluid flow is blocked or reduced.

In other words, the flexible sheets or foils are substantially impermeable for the working fluid.

According to a further embodiment of the invention, the flexible separator elements comprise dense textile sheets, in particular mineral textile sheets, or metal foils.

In the present context, the term "textile sheets" is meant to include mineral wool and other mineral and ceramic fiber materials.

According to a further embodiment of the invention, the thermal storage elements comprise a material selected from the group consisting of stone, lava stone, brick, granite, basalt, ceramics, and slag.

According to a further embodiment of the invention, the thermal energy storage uses air as a working fluid.

According to a second aspect of the invention there is provided a power plant for producing electrical energy, such as a steam power plant, an organic rankine cycle (ORC) power plant or a supercritical carbon dioxide cycle (sCO₂) power plant. The described power plant comprises a thermal energy storage according to the first aspect or any of the embodiments described above.

By using the thermal energy storage, the power plant is capable of storing energy in situations where production exceeds demand and then using it later when demand exceeds production.

The power plant may be part of or operating in conjunction with a wind power plant, which often has very varying production due to changes in wind speed and direction.

According to a third aspect of the invention there is provided a method of manufacturing a thermal energy storage. The described method comprises (a) providing a housing having a fluid inlet and a fluid outlet, and (b) arranging a thermal energy storage structure within the housing between the fluid inlet and the fluid outlet, the thermal energy storage structure comprising thermal energy storage elements and flexible separator elements, the flexible separator elements being arranged such that the thermal energy storage elements are separated into layers, each layer forming a channel between the fluid inlet and the fluid outlet.

This aspect of the invention is based on essentially the same idea as the first aspect described above, namely that flexible separator elements are arranged within the thermal energy storage structure in the housing in such a way that separate layers are formed, which are capable of changing their shape if the thermal storage elements compacts over time. Furthermore, the flexibility of the separator elements in terms of shape makes it possible to shape the channels individually in a number of ways.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a side-view of a known thermal energy storage.
Figure 2 shows a side-view of a thermal energy storage according to an embodiment of the present invention.
Figure 3 shows a side-view of a thermal energy storage according to a further embodiment of the present invention.
Figure 4 shows a side-view of a thermal energy storage according to a further embodiment of the present invention.

### Detailed Description

The illustrations in the drawings are schematic. It is noted that in different figures, similar or identical elements are provided with the same reference numerals or with reference numerals which differ only within the first digit.

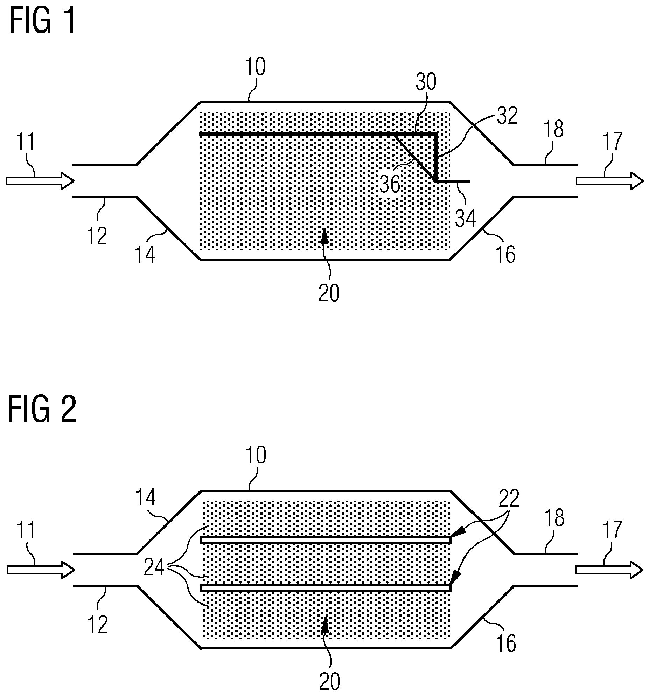

Figure 1 shows a side-view of a known thermal energy storage arranged in a housing 10. The thermal energy storage housing 10 comprises a fluid inlet 12 for receiving a working fluid, such as water, hot or cold steam, air, nitrogen or argon, as indicated by arrow 11. The thermal energy storage housing 10 further comprises a diffuser section 14 for evenly distributing the working fluid and for reducing the flow speed of the working fluid. The thermal energy storage further comprises thermal storage elements, such as bricks, stone, lava stone, granite, basalt or ceramics provided as bulk material within the housing 10 to form a thermal energy storage structure 20. The thermal energy storage housing 10 further comprises a nozzle section 16 for increasing flow speed and pressure of the working fluid leaving the thermal energy storage structure 20 in the housing 10 and forwarding it to fluid outlet 18 for ejection from the thermal energy storage, as indicated by arrow 17.

The thermal energy storage may be charged with thermal energy by feeding a hot working fluid, such as hot steam, to the fluid inlet 12. The working fluid will flow through the thermal energy storage in the thermal energy storage structure 20 and thereby heat up the thermal storage elements. The cooled working fluid leaves the storage via the fluid outlet 18. After the charging is completed, the storage may be left in a standstill period of hours or even days until the stored thermal energy is needed and discharged by feeding a cold working fluid, such as water, to the fluid inlet 12. After flowing through the thermal energy storage structure 20 within housing 10, the heated working fluid is ejected from the thermal energy storage through fluid outlet 18.

Figure 1 also shows a curve indicating the temperature distribution within the thermal energy storage structure 20 after charging. The ideal curve shows a constant high temperature section 30 within the thermal energy storage structure 20 and ends with a steep drop section 32 towards the lower temperature 34 at the cold end of the structure 20. In reality, however, the curve will have a sloped section 36 connecting the high temperature section 30 and the low temperature section 34. This is due to the natural convection within the structure 20 as discussed in the introduction. Over time, the sloped section 36 will be longer and longer, i.e. the high temperature section will be shorter and shorter. This and other problems can be avoided by the thermal energy storages according to embodiments of the present invention as described hereinafter.

Figure 2 shows a side-view of a thermal energy storage according to an embodiment of the present invention. The thermal energy storage according to this embodiment is generally similar to the thermal energy storage shown in Figure 1 and discussed above. Thus, the detailed description of common features will not be repeated here. However, the thermal energy storage according to this embodiment differs from the thermal energy storage shown in Figure 1 in that it comprises flexible separator elements 22 arranged within the thermal energy storage structure such that the thermal energy storage elements are separated into layers 24. Each layer 24 forms a separate channel between the fluid inlet and the fluid outlet. The flexible separator elements are preferably formed of mineral textile sheets or similar dense textile and thereby provide two important effects. First of all, natural convection within the storage structure 20 is significantly reduced by the separation into layers 24. Furthermore, the flexibility of the separation elements 22 assures that the structure 20 can stay compact even if some of the thermal energy storage elements move, crack or collapse. In other words, the channels 24 are able to change their shape over time in such a way that an empty space or headroom above the thermal storage elements within the channels 24 is avoided. Such empty spaces would cause convection within the layers 24 and in turn within the entire structure 20. Thus, the flexible separation elements 22 provide a significantly better reduction of natural convection within the storage structure 20 in comparison to rigid separator plates, such as steel plates.

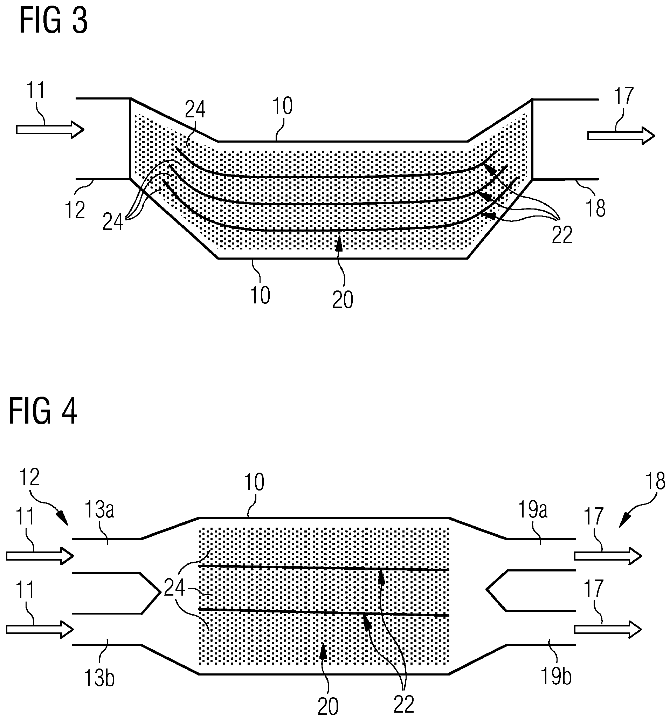

A further advantage of the flexible separator elements 22 is shown in Figure 3 which shows a side-view of a thermal energy storage according to a further embodiment of the present invention. Here, the separator elements 22 are arranged in a somewhat bent or curved fashion (or banana-like shape) to provide channels 24 extending downwards from the fluid inlet 11 and then up towards the fluid outlet 18. Thereby, as also shown in Figure 3, it is possible to position the fluid inlet 12 and fluid outlet 18 above the vertical middle of the structure 20, which may e.g. be beneficial when the structure is arranged below ground level.

Figure 4 shows a side-view of a thermal energy storage according to a further embodiment of the present invention. In this embodiment, the fluid inlet 12 comprises an inlet fluid distribution structure formed by a plurality of fluid inlet conduits 13a, 13b. Similarly, the fluid outlet 18 comprises an outlet fluid distribution structure formed by a plurality of fluid outlet conduits 19a, 19b. Although Figure 4 shows two fluid inlet conduits 13a, 13b and two fluid outlet conduits 19a, 19b, it is emphasized that any number of fluid inlet conduits and fluid outlet conduits may be used, e.g. three, four, five, six, seven, eight, nine, ten or more. Each conduit 13a, 13b, 19a, 19b may comprise a valve (not shown) for selectively opening and closing the corresponding conduit. Thereby, it is possible to selectively charge/discharge one or more of the channels 24.

Generally, the thermal energy storage according to the present invention is capable of storing thermal energy for a long standstill period while maintaining a uniform temperature distribution within the structure. Thereby, an extended lifetime of the thermal energy storage elements 20 is achieved and a constant temperature of the output fluid from the storage can be provided. Furthermore, the thermal energy storage of the present invention provides a high degree of flexibility as the channels can be shaped in a variety of ways, e.g. to accommodate constraints set by the chosen location for the storage.

The thermal energy storage may advantageously be used for temporarily storing excess energy at power production plants when production temporarily exceeds demand, e.g. in connected with a wind power plant which is susceptible to varying wind speeds and wind directions.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A thermal energy storage comprising
a housing (10) having a fluid inlet (12) and a fluid outlet (18), and
a thermal energy storage structure (20) arranged within the housing (10) between the fluid inlet (12) and the fluid outlet (18), the thermal energy storage structure (20) comprising thermal energy storage elements and flexible separator elements (22), the flexible separator elements (22) being arranged such that the thermal energy storage elements are separated into layers (24), each layer (24) forming a channel between the fluid inlet (12) and the fluid outlet (18).

2. The thermal energy storage according to the preceding claim, wherein each channel has a predetermined shape.

3. The thermal energy storage according to any preceding claims, wherein the fluid inlet (12) comprises an inlet fluid distribution structure adapted to selectively guide a working fluid towards one or more of the channels.

4. The thermal energy storage according to the preceding claim, wherein the inlet fluid distribution structure comprises a plurality of fluid inlet conduits (13a, 13b).

5. The thermal energy storage according to the preceding claim, wherein at least one fluid inlet conduit (13a, 13b) comprises a valve.

6. The thermal energy storage according to any preceding claim, wherein the fluid outlet (18) comprises an outlet fluid distribution structure adapted to selectively receive a working fluid from one or more of the channels.

7. The thermal energy storage according to the preceding claim, wherein the outlet fluid distribution structure comprises a plurality of fluid outlet conduits (19a, 19b).

8. The thermal energy storage according to the preceding claim, wherein at least one fluid outlet conduit (19a, 19b) comprises a valve.

9. The thermal energy storage according to any preceding claim, wherein the flexible separator elements (22) comprise sheets or foils of material through which the working fluid flow is blocked or reduced.

10. The thermal energy storage according to any preceding claim, wherein the flexible separator elements (22) comprise dense textile sheets, in particular mineral textile sheets, or metal foils.

11. The thermal energy storage according to any preceding claim, wherein the thermal storage elements comprise a material selected from the group consisting of stone, lava stone, brick, granite, basalt, ceramics, and slag.

12. A thermal energy storage according to any of the preceding claims, using air as a working fluid.

13. A power plant for producing electrical energy, comprising
a thermal energy storage according to any of the preceding claims.

14. A method of manufacturing a thermal energy storage, the method comprising
providing a housing (10) having a fluid inlet (12) and a fluid outlet (18), and
arranging a thermal energy storage structure (20) within the housing (10) between the fluid inlet (12) and the fluid outlet (18), the thermal energy storage structure (20) comprising thermal energy storage elements and flexible separator elements (22), the flexible separator (22) elements being arranged such that the thermal energy storage elements are separated into layers (24), each layer forming a channel between the fluid inlet (12) and the fluid outlet (18).
